# EUROPEAN PATENT SPECIFICATION

(11) **EP 0 637 008 B1**
(45) Date of publication and mention of the grant of the patent: **30.09.1998**
(21) Application number: 94305239.9
(22) Date of filing: 18.07.1994
(51) Int. Cl.: H04M 1/00, G08B 5/22, G09G 3/04

(54) **Automatic character size adjustment in the display of a portable apparatus**
Automatische Einstellung der Zeichengrösse in der Anzeige eines tragbaren Geräts
Ajustement automatique de la grandeur des caractères dans l'affichage d'un appareil portable

(30) Priority: 27.07.1993 GB 9315471
(43) Date of publication of application: 01.02.1995
(73) Proprietor: NOKIA MOBILE PHONES LTD., 24101 Salo (FI)
(72) Inventor: Kennard, Adrian J., Bracknell, Berkshire RG12 1UH (GB)
(74) Representative: Frain, Timothy John

(56) References cited:
- US-A- 4 896 147
- US-A- 5 212 477

## Description

The present invention relates to a display driver for a display comprising an array of N character display regions.

A display having an array of display regions each comprising a matrix of dot-like display elements is well-known and is conventionally referred to as a dot matrix display. However, it should be noted that the display elements do not have to be round dots but could be of square, rectangular, oval or the like shape. The display regions are arranged in substantially linear arrays which are generally orientated horizontally or vertically with respect to a normal viewing angle, and may be stacked adjacent each other in respective horizontal or vertical directions. Each of the display regions is of a size and has a display element density that is suitable for displaying a single character at each display region which is clear to a viewer when the display is in normal use. Typical display element density is 35 elements per display region and in which display region the elements are arranged in a 5x7 array.

Displays as described above are driven by display drivers which activate respective individual display elements in a display region in order to display a character input to the driver from control circuitry. The control circuit may be discrete logic, keyboard input circuitry, a microprocessor or the like. The individual display elements of a display which need to be activated by the driver to display a particular character can be determined by the driver in a number of ways. For example, the driver may comprise a memory known as a character set in which the data for activating individual display elements for displaying particular characters are stored. When a request to display a particular character is received by the driver, the driver obtains the pattern of individual display elements corresponding to the requested character from the character set and activates these display elements. Alternatively, the driver may receive instructions to activate individual display elements corresponding to desired characters directly from the control circuitry.

Display types as described above are used in many different types of apparatus, e.g. electrical apparatus such as telecommunication devices, pocket calculators, electronic diaries and in general display functions such as platform indicators etc. at railway stations.

United States Patent No. 4 896 147 discloses a display device for displaying characters of different sizes (16 x 8, 7 x 5), and United States Patent No. 5 212 477 discloses a display controller for controlling the size of characters to be displayed in accordance with the length of message to be displayed.

The number of display regions comprising the display depends on a number of factors such as the amount of space available for the display and the type of information to be displayed. In telecommunication devices, in particular portable telecommunication devices such as radio telephones, where space and size are at a premium, the number of display regions used in a linear array correspond to the minimum number of characters it is considered necessary or desirable to have displayed simultaneously on one line of the display. In telecommunication devices this is typically the maximum number of characters in a telephone number or the like, used in the particular system for which the telecommunication device was designed. Hitherto, in the UK the maximum number of characters in a public subscriber network telephone number has been ten, and typically ten digit displays have been used to maximise the clarity of the characters whilst remaining within space and size constraints. Display types as discussed above are generally available from suppliers in standard package sizes and with standard electrical contact pin layout. Thus, designers and manufacturers of telecommunications devices for use in the UK have built into the design of the devices space and connections for such displays, and have their production facilities designed to handle such standard packaged displays.

However, in the UK it has been proposed to increase the maximum number of characters in UK telephone numbers by at least one character. Thus, apparatus utilising ten digit displays will have to scroll the new longer numbers across the display, or if the apparatus has more than one row of display regions the extra digit can be "wrapped round" onto a lower line of the display. Representation of telephone numbers in the above way is unsatisfactory since the display looks unattractive, is laid out in an illogical way and is hence difficult to read. Thus, the user is more likely to make errors when dialling a telephone number displayed in such a way.

In order to overcome such undesirable displays, the design of the device can be physically altered to accommodate a display capable of displaying the longer numbers.

Such redesign is undesirable because of the cost in redesigning the device and in re-configuring the production lines to produce such redesigned devices. In particular, the frame of the device is likely to have to be redesigned in order to accommodate a different sized display as well as rearranging the electrical contacts to the new display.

According to a first aspect of the present invention there is provided a display driver for a display comprising an array of N fixed character display regions, the driver comprising character generating means which in a first mode of operation returns to at least one of said display regions a single character extending across a width of the at least one display region, and in a second mode of operation returns two characters extending across the width of said at least one display region, wherein the second mode of operation is operable when a sequence of M characters input to the driver fulfils a relationship N<M≤2N, and characters returned to the display regions during the second mode of operation respectively correspond to the first 2(M-N) characters in the sequence.

According to a further aspect of the invention there is provided a method of driving a display including an array of N character display regions, comprising generating and returning to at least one of said display regions a single character extending across a width of the at least one display region in a first mode of operation, and generating and returning two characters extending across the width of said at least one display region in a second mode of operation, wherein the second mode is operable when a sequence of M characters fulfils a relationship N<M≤2N, and characters returned to the display regions during the second mode of operation respectively correspond to the first 2(N-M) characters in the sequence.

The invention has the advantage that up to twice as many characters as before can be displayed on the display. Thus, it would not be necessary to redesign the device if it became desirable to display more characters than were previously needed to be displayed. Furthermore, a user could choose in which mode they wanted characters to be displayed, so that they could have more information displayed simultaneously than could be displayed in normal operation of the display. The characters may be automatically returned to the display in the second mode if a sequence of characters input to the driver exceeds the number of display regions available on the display. The driver can be preset either by the user or at the factory to display characters in the second mode dependent upon the type or number of characters input to the driver.

A driver and a method of driving a display wherein characters returned to the display regions during the second mode of operation respectively correspond to the first 2(N-M) characters in the sequence, has particular applications in telecommunications devices. A telephone number or the like comprises a greater than usual number of characters when an area code has had an extra digit added to it, or the number is an international number having the international and country code prefixing the area code and the telephone number. The prefixed area codes or international and country codes are generally of less significance to the user than the actual telephone number. This is because the number that varies most when making telephone calls or the like is the actual telephone number. Thus, because the prefixed numbers are of less significance than the later numbers, it does not matter to the user that such numbers are displayed two on a single display region (i.e. in the second mode).

A driver adapted to drive and a method for driving a display having at least one array of ten character display regions is particularly suited to telecommunications devices designed for use in the UK or other regions having or previously having telephone numbers with a maximum of ten characters, and now or soon to have telephone numbers comprising more than ten characters.

Problems and difficulties arising out of the proposed change to UK telephone numbers wherein most dialling codes will start "01" can be addressed by a driver wherein the character generating means returns a maximum sequence of eleven characters to the display and a method for generating and returning a maximum sequence of eleven characters to the display, and in particular by a driver wherein the character generating means returns a special compressed character comprising a reduced width "0" and a reduced width "1" to a display region at the left of the array when the first two numerical characters of the sequence are "0" and "1" and the sequence comprises eleven numerical characters, and a method for generating and returning a special compressed character comprising a reduced width "0" and a reduced width "1" to a display region at the extreme left of the array when the first two characters of the sequence are "0" and "1" and the sequence comprises eleven characters. Since the "01" will be a standard prefix for almost all telephone numbers and the like, the information content and significance of the pre-fix will be low. Thus it does not matter that the "01" characters will be returned to and displayed on a single display region and have a reduced width, thereby reducing the clarity of the prefixed "01".

A driver as described above is particularly suited for driving displays such as dot matrix displays, especially when used in conjunction with telecommunication devices.

A specific embodiment of the invention will now be described by way of example only and with reference to the following drawings in which:
Figure 1 shows a radio telephone;
Figure 2 shows a schematic block circuit diagram for the radio telephone in figure 1;
Figure 3 shows (a) a single display region of a dot matrix display, (b) a typical single display region of a dot matrix display driven in accordance with an embodiment of the present invention, and (c) normal display of digits on a 5x7 array;
Figure 4 shows a flow chart for implementing a display driver and method of driving a display in accordance with the present invention; and
Figure 5 shows a flow chart for implementing a display driver and method of driving a display for displaying a reduced width "01" on a 10 character display.

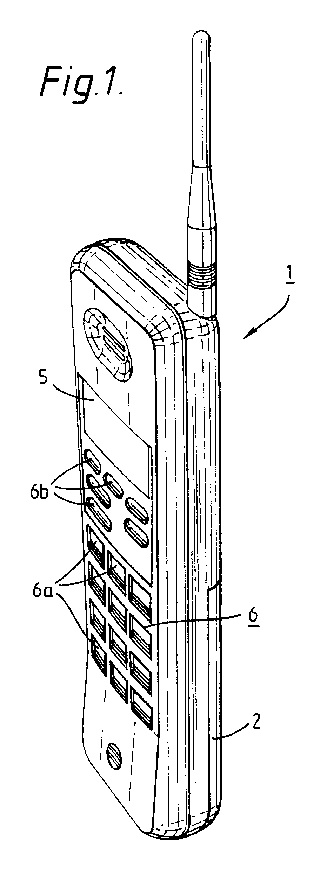

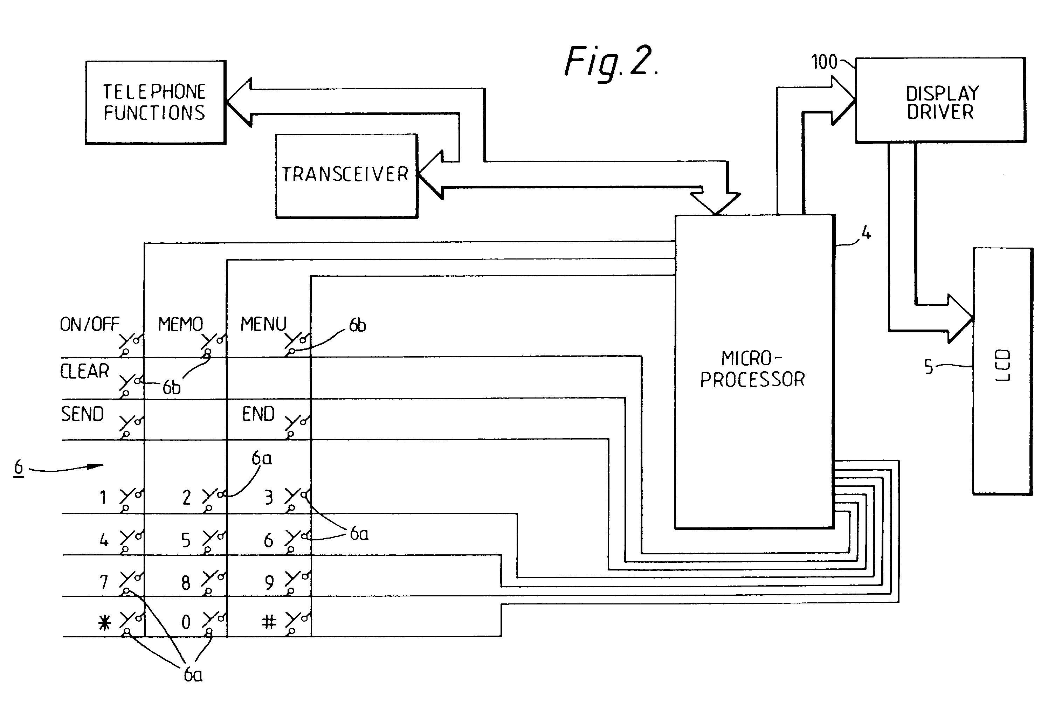

The portable radio telephone shown in Figure 1 is a cellular telephone 1 powered by a rechargeable battery pack 2. The telephone 1 includes a transceiver and all the other features conventionally found in a cellular telephone, as shown schematically in Figure 2. Since these aspects of the telephone are not directly relevant to the instant invention no further details will be given here, except to say that a single microprocessor 4 (see Figure 2) is employed to control all the basic functions of the telephone 1 and to control the keypad and display functions. Alternatively, the telephone functions may be controlled by a master microcomputer, while the keypad and display functions are under the control of a separate slave microcomputer coupled to communicate with the master microcomputer.

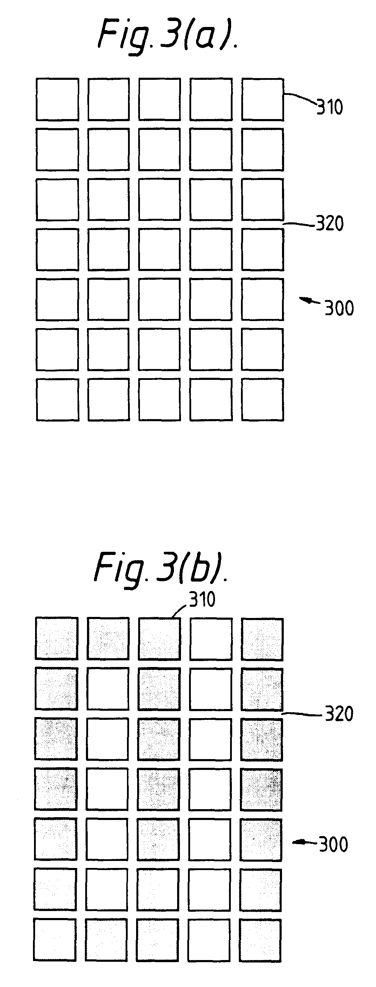

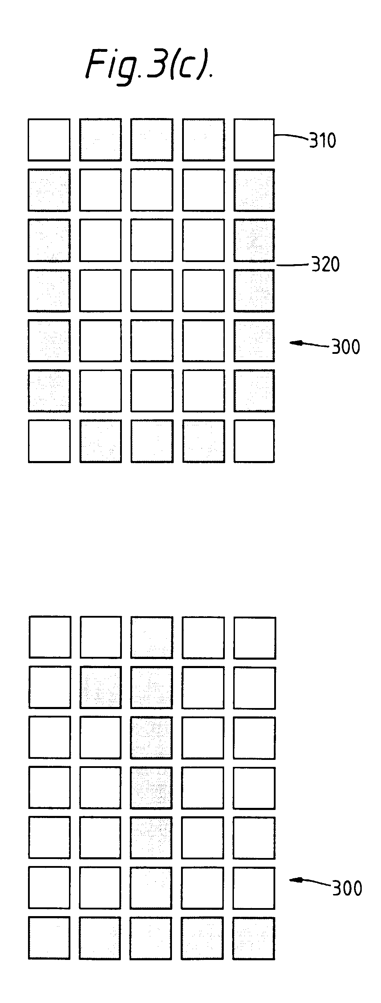

The user-interface of telephone 1 comprises a display, e.g. a liquid crystal display 5, itself well-known in the art and a keypad 6 on the front of the telephone 1. A single display region of a typical dot matrix display is shown in figure 3a). The display region 300 comprises a 5x7 array of display elements 310, and each display element is separated by a non-display element 320. The liquid crystal display 5 is typically a 10 character display, i.e. it has 10 adjacent display regions. The keypad 6 essentially comprises two main sets of keys, namely alphanumeric keys 6a associated with alphanumeric data especially for dialling telephone numbers, but also (optionally) for entering alphanumeric data into the telephone memories, e.g. a subscriber number index, and a set of function keys 6b for enabling various predetermined functions or operations.

The keys 6a are arranged in four rows of three keys each. As is conventional for the numeric key layout of a telephone, the top row comprises keys for numbers 1,2 and 3 respectively, the second row down for numbers 4, 5 and 6 respectively, the next row down for numbers 7, 8 and 9 respectively, and the bottom row for *, 0 and # respectively. Some or all of these keys may also be associated with alphabet information, as again is quite conventional. The alphabetic rather than numeric data is selected for example by preceding the alphanumeric keystroke with another predetermined keystroke or set of keystrokes, specifically using the function keys. Hence the alphabetic data mode may be enabled for example by preceding the particular keystroke with previously depressing a "MEMORY" or "STORE" key disposed among the function keys 6b.

As is usual in cellular telephones, the keys 6b include a "SEND" and "END" key for respectively initiating and terminating a telephone call. Another key,specifically located in the top left-hand corner is an "ON/OFF" key for turning the telephone on and off, i.e. by connecting and disconnecting the battery pack power supply. Another of the function keys may be a menu or function key labelled, for example, "MENU" or "FUNCTION" or with a suitable abbreviation thereof. Depression of this key enables a variety of pre-set menus, the related instructions of which are stored in memory, to be viewed and selectively enabled. The various menus are selected by depressing the appropriate alphanumeric keys after depressing the "MENU" or "FUNCTION" key. The relevant menu is shown to the user in words or abbreviations on the display panel 5. For example, the user may be able to select the ringing tone by appropriate menu selection. More sophisticated options may also be available via the menu facility. For example, the user may be able to enable the so-called Discontinuous Transmission mode which employs a voice activated switch which helps to reduce battery drain by transmitting only when speech is input to the microphone.

In accordance with the present invention the telephone additionally comprises a display driver 100 for driving the display 5 under control of the microprocessor 4.

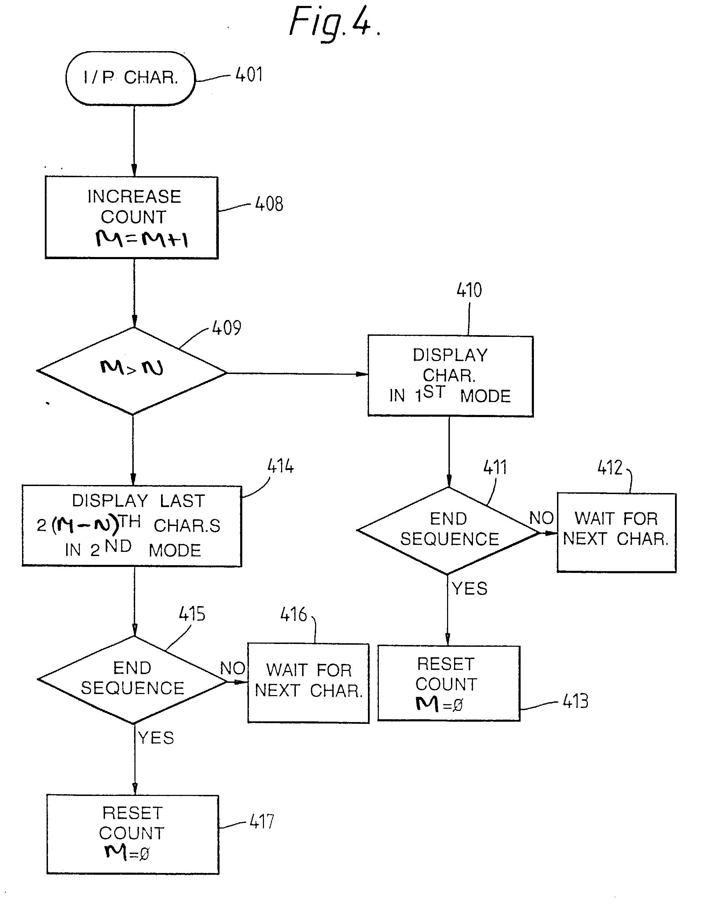

Figure 4 is a flow chart which may be used to implement the operation of microprocessor 4 of figure 2 in relation to instructing the display driver 100 of figure 2 to return two characters to a single display region of display 5. The flowchart begins at block 401 when a character is input to the microprocessor 4. At block 408 a character counter variable M is increased by 1 and then compared with the number of display regions N on the display 5 at block 409. If M is less or equal to the number of display regions on the display then the display driver is instructed to display the input character in a first mode (i.e. normal mode, one character per display region 300) at block 410. Having displayed the character at block 410 the microprocessor then checks at block 411 whether or not the current sequence of characters had ended. If the sequence has ended then the character count variable M is reset to 0 at block 413, otherwise the microprocessor waits for the next character to be input.

If the character count variable M at block 409 is greater than N then at block 414 the microprocessor 4 instructs the display driver 100 to return the last 2(M-N) characters input to the microprocessor to the display 5 in a second mode (i.e. two characters to each last (M-N) display regions). After displaying the last 2(M-N) characters in the second mode, the microprocessor checks at block 415 to see if the current character sequence has ended or not. If it has then the character counter variable M is reset to 0 at block 417 and if not the microprocessor 4 waits at block 416 for the next character to be input.

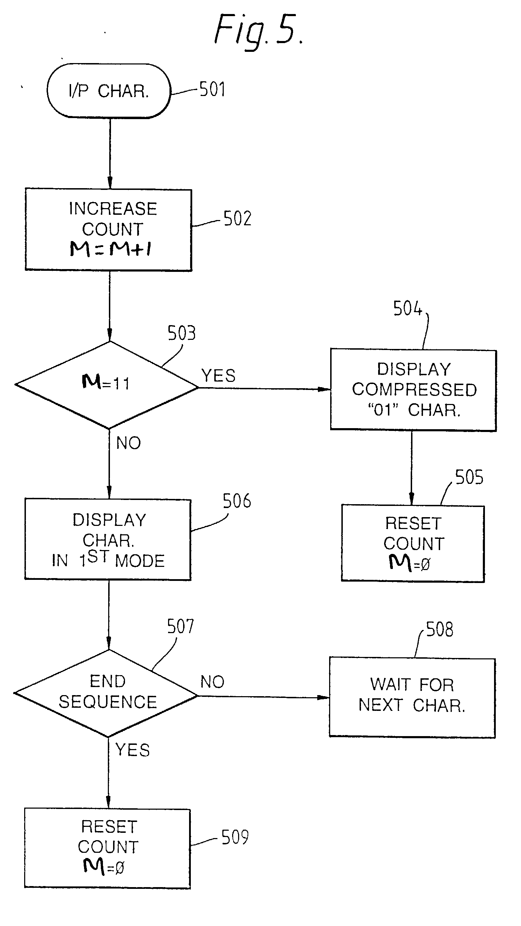

Figure 5 shows a flowchart for implementing the display driver 100 and the method for driving the display 5 when used in conjunction with a radio telephone operating in the proposed new UK 11 digit telephone number system and having a 10 digit display.

A digit is input to the microprocessor 4 at block 501 and a digit counter variable M is increase by one at block 502. If the number of digits input to the microprocessor in the current sequence (M) is equal to 11 then a special compressed "01" character is returned to the leftmost display region of display 5 at block 504. Then the digit counter variable M is reset to 0. If the number of characters in the current sequence is not equal to 11 then the character is displayed at block 506 in the 1st mode. Then block 507 checks to see if the current sequence is ended and if it has M is reset to 0, and if it has not the microprocessor waits at block 508 for the next character.

As can be seen from figure 3(c) digits displayed on a 5x7 array usually take up the whole horizontal width of the array. However, as can be seen from Figure 3(b) the compressed width "01" character fits onto a 5x7 array.

In figure 3(b) the compressed width "01" character comprises narrow "0" and narrow "1" characters. The respective narrow characters use only that width of the array which is necessary for the corresponding digit to be recognisable. Thus, the narrow "0" shown in figure 3(b) uses only a width of 3 display elements, since that is all that is necessary to display sufficient features to make the character recognisable. Similarly, the narrow "1" character takes up a width of only 1 display element, since that is all that is necessary for it to be recognisable. Furthermore, in order for a character to be recognisable it must also be distinguishable from adjacent characters. Thus, a space having a width of 1 display element is left between the narrow "0" and "1" characters so that they are distinguishable from each other.

In view of the foregoing description it will be evident to a person skilled in the art that various modifications may be made within the scope of the invention. For example, the type of array need not be limited to 5x7 arrays. Nor need the compressed characters be limited to digits, but could comprise letters or combinations of letters and digits.

## Claims

1. A display driver (100) for a display (5) comprising an array of N fixed character display regions (300), the driver (100) comprising
character generating means which in a first mode of operation returns to at least one of said display regions (300) a single character extending across a width of the at least one display region, and in a second mode of operation returns two characters extending across the width of said at least one display region (300), wherein the second mode of operation is operable when a sequence of M characters input to the driver (100) fulfils a relationship N<M≤2N, and characters returned to the display regions (300) during the second mode of operation respectively correspond to the first 2(M-N) characters in the sequence.

2. A display driver (100) according to claim 1, wherein the driver (100) is adapted to drive a display (5) having at least one array of ten character display regions (300).

3. A display driver (100) according to claim 2, wherein the character generating means returns a maximum sequence of eleven characters to the display (5).

4. A display driver (100) according to claim 3, wherein the character generating means returns a special compressed character comprising a reduced width "0" and a reduced width "1" to a display region (300) at the left of the array when the first two numerical characters of the sequence are "0" and "1" and the sequence comprises eleven numerical characters.

5. A display driver (100) as claimed in any preceding claim for a dot matrix display (5).

6. Electronic apparatus (1) comprising a display (5) having an array of N character display regions (300) and having a display driver (100) according to any preceding claim.

7. A method of driving a display (5) including an array of N character display regions (300), comprising generating and returning to at least one of said display regions (300) a single character extending across a width of the at least one display region (300) in a first mode of operation, and generating and returning two characters extending across the width of said at least one display region (300) in a second mode of operation, wherein the second mode is operable when a sequence of M characters fulfils a relationship N<M≤2N, and characters returned to the display regions (300) during the second mode of operation respectively correspond to the first 2(N-M) characters in the sequence.

8. A method according to claim 7, for driving a display (5) having at least one array of ten character display regions (300).

9. A method according to claim 8 for generating and returning a maximum sequence of eleven characters to the display (5).

10. A method according to claim 9 for generating and returning a special compressed character comprising a reduced width "0" and a reduced width "1" to a display region at the extreme left of the array when the first two characters of the sequence are "0" and "1" and the sequence comprises eleven characters.

11. A method according to any of claims 7 to 10 for driving a dot matrix display (5).

## Patentansprüche

1. Anzeigentreiber (100) für eine Anzeige (5), die eine Anordnung von N festen Zeichenanzeigebereichen (300) aufweist, mit
Zeichenerzeugungsmitteln, die in einer ersten Betriebsart an mindestens einen der Anzeigebereiche (300) ein einzelnes sich über eine Breite des wenigstens einen Anzeigebereichs erstreckendes Zeichen zurückliefern und in einer zweiten Betriebsart zwei sich über die Breite des wenigstens einen Anzeigebereichs (300) erstreckende Zeichen zurückliefern, wobei die zweite Betriebsart durchführbar ist, wenn eine Folge von M in den Treiber (100) eingegebenen Zeichen eine Bedingung N<M≤2N erfüllt und Zeichen, die während der zweiten Betriebsart an die Anzeigebereiche(300) zurückgeliefert werden, jeweils mit den ersten2(M-N) Zeichen der Zeichenfolge korrespondieren.

2. Anzeigentreiber (100) nach Anspruch 1, wobei der Treiber (100) ausgelegt ist, um eine Anzeige (5) mit mindestens einer Anordnung von zehn Zeichenanzeigebereichen (300) anzusteuern.

3. Anzeigentreiber (100) nach Anspruch 2, wobei die Zeichenerzeugungsmittel eine maximale Folge von elf Zeichen an die Anzeige (5) zurückliefern.

4. Anzeigentreiber (100) nach Anspruch 3, wobei die Zeichenerzeugungsmittel ein spezielles komprimiertes Zeichen mit einer "0" reduzierter Breite und einer "1" reduzierter Breite an einen Anzeigebereich (300) links in der Anordnung zurückliefern, wenn die ersten zwei nummerischen Zeichen der Folge "0" und "1" sind und die Folge elf nummerische Zeichen umfaßt.

5. Anzeigentreiber (100) nach irgendeinem der vorangegangenen Ansprüche, für eine Punktmatrixanzeige (5).

6. Elektronisches Gerät (1) umfassend eine Anzeige (5) mit einer Anordnung von N Zeichenanzeigebereichen (300), und mit einem Anzeigentreiber (100) nach irgendeinem der vorangegangenen Ansprüche.

7. Verfahren zur Ansteuerung einer Anzeige (5), die eine Anordnung von N Zeichenanzeigebereichen (300) aufweist, bei dem in einer ersten Betriebsart ein einzelnes sich über eine Breite des mindestens einen Anzeigebereichs (300) erstreckendes Zeichen erzeugt und an mindestens einen der Anzeigebereiche (300) zurückgeliefert wird, und bei dem in einer zweiten Betriebsart zwei sich über die Breite des mindestens einen Anzeigebereichs (300) erstreckende Zeichen erzeugt und zurückgeliefert werden, wobei die zweite Betriebsart durchführbar ist, wenn eine Folge von M Zeichen eine Bedingung N<M≤2N erfüllt und Zeichen, die während der zweiten Betriebsart an die Anzeigenbereiche (300) zurückgeliefert werden, jeweils mit den ersten 2(M-N) Zeichen der Folge korrespondieren.

8. Verfahren nach Anspruch 7, zur Ansteuerung einer Anzeige (5), die mindestens eine Anordnung von zehn Zeichenanzeigebereichen (300) aufweist.

9. Verfahren nach Anspruch 8, zum Erzeugen und Zurückliefern einer maximalen Folge von elf Zeichen an die Anzeige (5).

10. Verfahren nach Anspruch 9, zum Erzeugen und Zurückliefern eines speziellen komprimierten Zeichens mit einer "0" reduzierter Breite und einer "1" reduzierter Breite an einen Anzeigebereich links in der Anordnung, wenn die ersten zwei Zeichen der Folge "0" und "1" sind und die Folge elf Zeichen umfaßt.

11. Verfahren nach irgendeinem der Ansprüche 7 bis 10, zur Ansteuerung einer Punktmatrixanzeige (5).

## Revendications

1. Commande d'affichage (110) pour un affichage (5) comprenant un ensemble fixe de N régions d'affichage (300) de caractères, la commande (100) comprenant :
un moyen pour générer des caractères qui, dans un premier mode de fonctionnement, envoie sur au moins une desdites régions d'affichage (300), un seul caractère s'étendant sur la largeur de ladite région d'affichage et, dans un second mode de fonctionnement, envoie deux caractères s'étendant sur la largeur de ladite région d'affichage (300); le second mode de fonctionnement pouvant être mis en oeuvre quand une séquence de M caractères entrés dans la commande (100) satisfait à la relation N < M ≤ 2N, les caractères envoyés sur les régions d'affichage (300) dans le second mode de fonctionnement correspondant alors aux premiers 2(M - N) caractères dans la séquence.

2. Commande d'affichage (100) selon la revendication 1, dans laquelle la commande (100) est prévue pour commander un affichage (5) ayant au moins un ensemble de dix régions (300) d'affichage de caractères.

3. Commande d'affichage (100) selon la revendication 2, dans laquelle le moyen pour générer les caractères envoie au maximum une séquence de onze caractères à l'affichage (5).

4. Commande d'affichage (100) selon la revendication 3, dans laquelle le moyen pour générer les caractères envoie une entité comprimée spéciale comprenant un "0" à largeur diminuée et un "1" à largeur diminuée sur une région d'affichage (300) à gauche de l'ensemble, quand les deux premiers caractères numériques de la séquence sont "0" et "1" et que la séquence comprend onze caractères numériques.

5. Commande d'affichage (100) selon l'une quelconque des revendications précédentes, pour un affichage matriciel par points (5).

6. Appareil électronique (1) comprenant un dispositif d'affichage (5) ayant un ensemble de N régions d'affichage (300) de caractères et ayant une commande d'affichage (100) selon l'une quelconque des revendication précédentes.

7. Procédé de commande d'un affichage (5) comprenant un ensemble de N régions d'affichage (300) de caractères, consistant à générer et à envoyer, sur au moins une desdites régions d'affichage (300), un seul caractère s'étendant sur la largeur de ladite région d'affichage (300) dans un premier mode de fonctionnement et à générer et à envoyer deux caractères s'étendant sur la largeur de ladite région d'affichage (300), dans un second mode de fonctionnement, le second mode de fonctionnement pouvant être mis en oeuvre quand une séquence de M caractères satisfait à la relation N < M ≤ 2N, les caractères envoyés sur les régions d'affichage (300) dans le second mode de fonctionnement correspondant alors au premiers 2(M - N) caractères dans la séquence.

8. Procédé selon la revendication 7, pour la commande d'un affichage (5)ayant au moins un ensemble de dix régions d'affichage (300) pour les caractères.

9. Procédé selon la revendication 8, pour générer et envoyer une séquence maximale de onze caractères sur l'affichage (5).

10. Procédé selon la revendication 9 pour générer et envoyer une entité comprimée spéciale comprenant un "0" à largeur diminuée et un "1" à largeur diminuée sur une région d'affichage (300) à l'extrême gauche de l'ensemble, quand les deux premiers caractères numériques de la séquence sont "0" et "1" et que la séquence comprend onze caractères numériques.

11. Procédé selon l'une quelconque des revendications 7 à 10 pour commander un affichage matriciel par points (5).
